# EUROPÄISCHE PATENTSCHRIFT

(11) **EP 2 381 154 B1**
(45) Veröffentlichungstag und Bekanntmachung des Hinweises auf die Patenterteilung: **19.06.2019**
(21) Anmeldenummer: 11158691.3
(22) Anmeldetag: 17.03.2011
(51) Int. Cl.: F16L 55/033

(54) **Rohrschalldämpfer für eine Strömungsmaschine**
Tubular sound absorber for a flow machine
Amortisseur de bruit tubulaire pour turbomachine

(30) Priorität: 22.04.2010 DE 102010028089
(43) Veröffentlichungstag der Anmeldung: 26.10.2011
(73) Patentinhaber: MAN Energy Solutions SE, 86153 Augsburg (DE)
(72) Erfinder: Büssow, Richard, Dr., 46147 Oberhausen (DE)

(56) Entgegenhaltungen:
- EP-A2- 0 694 635
- DE-B- 1 242 383
- US-A- 3 363 591
- US-A- 4 150 732
- US-A1- 2006 199 501

## Beschreibung

Die Erfindung betrifft einen Rohrschalldämpfer für eine Strömungsmaschine, insbesondere für einen Kompressor.

Beim Betrieb von Strömungsmaschinen treten häufig Schwingungen auf, die beispielsweise durch Druckschwankungen im Fluid, periodische Anregungen der Maschine oder dergleichen aufgeprägt werden und insbesondere zu unerwünschter Schallabstrahlung führen. Um die Weiterleitung und Abstrahlung von Schall zu reduzieren, ist es bekannt, Strömungsmaschinen oder deren Stufen Rohrschalldämpfer vor- und/oder nachzuschalten, die von dem Fluid durchströmt werden und die Schallausbreitung reduzieren. Ein solcher Rohrschalldämpfer ist beispielsweise aus der DE1242383 bekannt.

Aus betriebsinterner Praxis ist hierzu ein Rohrschalldämpfer bekannt, in dem Fluid Dämpferkulissen umströmt, die in einem Gehäuse aufgenommen sind. Oft bestehen diese Dämpferkulissen aus porösem Fasermaterial, beispielsweise Glaswolle oder dergleichen, und es besteht die Gefahr des Faserverlustes, so dass nur begrenzte Strömungsgeschwindigkeiten möglich sind, ausreichend große Beruhigungsstrecken und große Querschnitte erforderlich sind.

Aufgabe der vorliegenden Erfindung ist es, einen verbesserten Rohrschalldämpfer für eine Strömungsmaschine, insbesondere einem Kompressor, zu Verfügung zu stellen und zudem ein Verfahren zum Einbau eines solchen Rohrschalldämpfers bereitzustellen, der flexibel einsetzbar sowie für unterschiedliche Frequenzspektren herstellbar ist und die Nachteile des Stands der Technik vermeidet.

Zur Lösung dieser Aufgabe ist ein Rohrschalldämpfer nach dem Oberbegriff des Anspruchs 1 durch die kennzeichnenden Merkmale des Anspruchs 1 weitergebildet, die Unteransprüche betreffen vorteilhafte Weiterbildungen.

Anspruch 13 stellt ein Verfahren zum Einbau eines erfindungsgemäßen Rohrschalldämpfers unter Schutz, die Unteransprüche betreffen vorteilhafte Weiterbildungen.

Die vorliegende Erfindung weist im Vergleich zum Stand der Technik folgende Vorteile auf:
Kein Fasermaterial zur Dämpfung, dadurch sind höhere Strömungsgeschwindigkeiten sowie der Verzicht auf eine Vorlaufstrecke möglich und somit ergeben sich mehr Freiheiten in der Planung der Rohrleitungen.

Schmale Bauform mit geringer Verblockung des freien Strömungsquerschnitts, dadurch sind nur geringere oder keine Aufweitungen der Leitung notwendig und es lassen sich Kosten sparen.

Es hat sich überraschenderweise herausgestellt, dass bei Rohrschalldämpfern durch Einsatz von an sich bekannten akustischen Linern eine hohe Dämpfung bei niedriger Bauhöhe erreicht werden kann. Diese Liner bestehen beispielsweise aus Kammern und einer Abdeckung aus Lochblechen, dies führt zu einem Helmholtz-Resonator Effekt. Bei einer Abdeckung der Kammern durch schalldämmende Metalle geht der Helmholtz-Resonator Effekt in einen λ/4 Resonator über.

Die Kammern werden durch ineinander gestecktes dünnes Blech (Stringer) im Inneren der Dämpferkulisse und durch Einsatz einer umfangsseitigen schallharten Rückwand gebildet, daraus ergibt sich eine wabenförmige Dämpferkulisse.

Der Grundgedanke der Erfindung beruht auf der optimalen Anordnung eines akustischen Liners zur Dämpfung von Schall in einer Rohrleitung.

Ein erfindungsgemäßer Rohrschalldämpfer ist für eine Strömungsmaschine vorgesehen und wird mit besonderem Vorteil bei Kompressoren verwendet, die aufgrund Ihres Wirkmechanismus einer starken periodischen Schwingungserregung ausgesetzt sind. Er umfasst einen Flansch sowie ein Gehäuse zum Einbau in die Rohranordnung der Strömungsmaschine, schallharte Gehäusewandungen, ein- oder bevorzugt mehrere Dämpferkulissen, Stützelemente bei mehreren Dämpferkulissen, axiale und umfangsseitige den Schall absorbierende akustischen Liner (Stringer), schalldämmende Metallelemente, schallharten Zwischenwandungen. Abschlussbleche, Elemente zur Führung eines Fluides der Strömungsmaschine, etwa eines Prozessgases, einer Flüssigkeit oder dergleichen, einem zentralen Zuganker zur lösbaren Befestigung einzelner Rohrschalldämpferelemente und Elemente zum optimalen Einbau in die Strömungsumgebung.

Der Rohrschalldämpfer ist selbstragend und besteht im Wesentlichen aus den vorstehend genannten Bestandteilen.

Gemäß der Erfindung ist zur Ausbildung nur einer äußeren Dämpferkulisse, eine schallharte Rückwand stirnseitig mit Abschlussblechen verbunden. Die Ausbildung einer walzenförmigen Dämpferkulisse erfolgt über Axial- und Umfangsstringer, die sich entlang der Lange des Rohrschalldämpfers zwischen der schallharten Rückwand und des zum strömungsführenden Querschnitt befindlichen schalldämmenden Metalls befinden.

Nach einem weiteren Aspekt der Erfindung zur Ausbildung einer zusätzlichen zentralen Dämpferkulisse in Verbindung mit einer äußeren Dämpferkulisse, ist ein inneres Stützkreuz mit den Stirnseiten inneren Abschlussblechen verbunden. Die Ausbildung der Dämpferkulisse erfolgt über Axial- und Umfangsstringer, die entlang der Länge des Rohrschalldämpfers innen mit dem schalldämmenden Metall in Verbindung stehen. Die Verbindung des inneren Stützkreuzes mit der äußeren Dämpferkulisse erfolgt über deren äußeren Abschlussbleche.

Nach einem weiteren Aspekt der Erfindung zur Ausbildung einer zusätzlichen inneren Dämpferkulisse in Verbindung mit einer zentralen und äußeren Dämpferkulisse, ist das innere Stü tzkreuz am äußeren Umfang mit den inneren Abschlussblechen verbunden. Die Ausbildung der Dämpferkulisse erfolgt über Axial- und Umfangsstringer, die entlang der Länge des Rohrschalldämpfers außen mit dem schalldämmenden Metall in Verbindung stehen und durch ein weiteres äußeres schalldämmendes Metall die wabenförmige innere Dämpferkulisse bilden. Die Verbindung von dann erforderlichen inneren und äußeren Stützkreuzen mit der inneren Dämpferkulisse erfolgt über die Abschlussbleche der äußeren und zentralen Dämpferkulisse. In einer bevorzugten Ausführungsform erfolgt die Ausführung der Dämpferkulisse doppelseitig, so dass zwischen dem inneren und äußeren umfangsseitigen schalldämmenden Metall noch eine schallharte Rückwand vorhanden ist und somit auch die Anordnung der Axial- und Umfangsstringer, getrennt durch die schallharte Rückwand, sowie des schalldämmenden Metalls doppelt erfolgt.

Das schalldämmende Metall, die Axial- und Umfangsstringer sind vorzugsweise blechartig geformt, besitzen eine geringe Dicke (ca. 0,5 -1,5 mm) und werden untereinander durch Steckverbindungen gehalten.

Um Rohrschalldämpfer unterschiedlichster Länge und für unterschiedlichste Bedürfnisse kostengünstig herstellen zu können, bestehen längere Rohrschalldämpfer vorzugsweise aus zusammengesetzten und vorgefertigten Rohrschalldämpferelementen. Die Verbindung dieser einzelnen Elemente erfolgt über Stifte in den Stützkreuzen und zentral durch einen Zuganker, der in der Mitte der zentralen Dämpferkulisse angeordnet ist.

Zentrale und mittlere Dämpferkulissen werden durch Anströmkappen abgedeckt, dies hat strömungstechnische Vorteile und schützt das innere der Dämpferkulisse.

In die Wahl des Werkstoffs der schalldämmenden Metalle und der Axial- und Umfangsstringer können verschiedene Umgebungsanforderungen und Schallleitungscharakteristika für vorgegebene Frequenzbereiche besonders berücksichtigt und vorbestimmt werden.

Für sehr kleine Rohrschalldämpfer ist es denkbar, dass die zentrale und mittlere Dämpferkulisse entfällt und somit nur die ringförmige äußere Dämpferkulisse vorhanden ist. Ein oder mehrere Stützkreuze sind dann nur bei statischer Notwendigkeit vorgesehen.

Für Rohrschalldämpfer mit kleineren bzw. mittleren Durchmessern ist es denkbar, dass die mittlere Dämpferkulisse entfällt und somit nur eine zentrale und eine ringförmige äußere Dämpferkulisse vorhanden ist.

Für Rohrschalldämpfer mit größerem Durchmesser ist es denkbar, dass, zusätzlich zu den zentralen und äußeren Dämpferkulissen, zwei oder mehrere mittlere Dämpferkulissen vorhanden sind.

Um den Einbau des Rohrschalldämpfers zu vereinfachen und um den Einbau in unrunde Strömungsquerschnitte der Zu- und Ableitungen der Strömungsmaschine zu gewährleisten, sind einerseits Ausgleichsbleche am Umfang des Rohrschalldämpfers und / oder Kugelrollen am Ende eines Rohrschalldämpferelementes denkbar.

Ein Ausführungsbeispiel der Erfindung wird anhand der Zeichnungen erläutert.

Es zeigt:
- Fig. 1:: Die Vorderansicht eines Rohrschalldämpfers nach einer Ausführung der vorliegenden Erfindung im Längsschnitt.
- Fig. 2:: Die Seitenansicht eines Rohrschalldämpfers nach einer Ausführung der vorliegenden Erfindung im Längsschnitt.
- Fig. 3:: Die Seitenansicht eines Ausschnittes (Detail "X") des Rohrschalldämpfers nach einer Ausführung der vorliegenden Erfindung im Längsschnitt.
- Fig. 4:: Die Seitenansicht eines Axialstringers nach einer Ausführung der vorliegenden Erfindung.
- Fig. 5:: Die Vorderansicht eines Abschlussbleches nach einer Ausführung der vorliegenden Erfindung.
- Fig. 6:: Die Vorderansicht eines Umfangsstringers nach einer Ausführung der vorliegenden Erfindung.
- Fig. 7:: Die Seitenansicht eines Ausschnittes (Detail "y") zur Anordnung der Ausgleichsbleche nach einer Ausführung der vorliegenden Erfindung im Längsschnitt.
- Fig. 8:: Die Seitenansicht eines Ausschnittes zur Anordnung der Kugelrolle nach einer Ausführung der vorliegenden Erfindung im Längsschnitt.

Ein Rohrschalldämpfer gemäß einem Ausführungsbeispiel der vorliegenden Erfindung wird unter Bezugnahme auf die beigefügten Zeichnungen beschrieben.

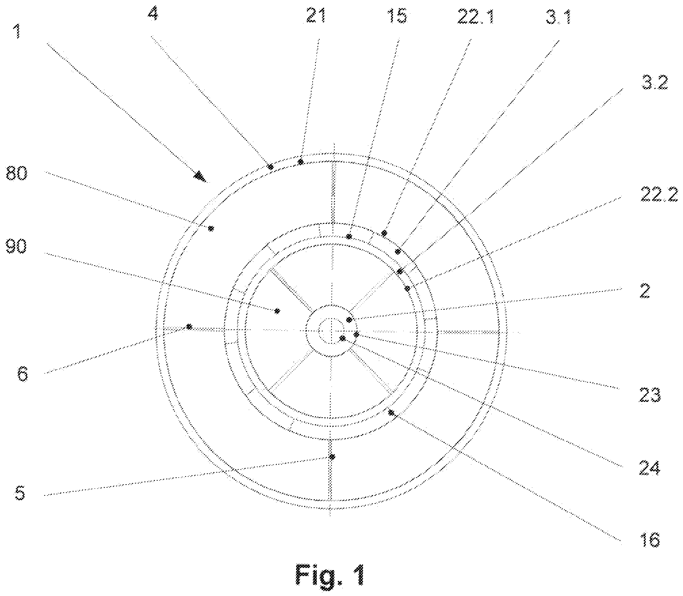

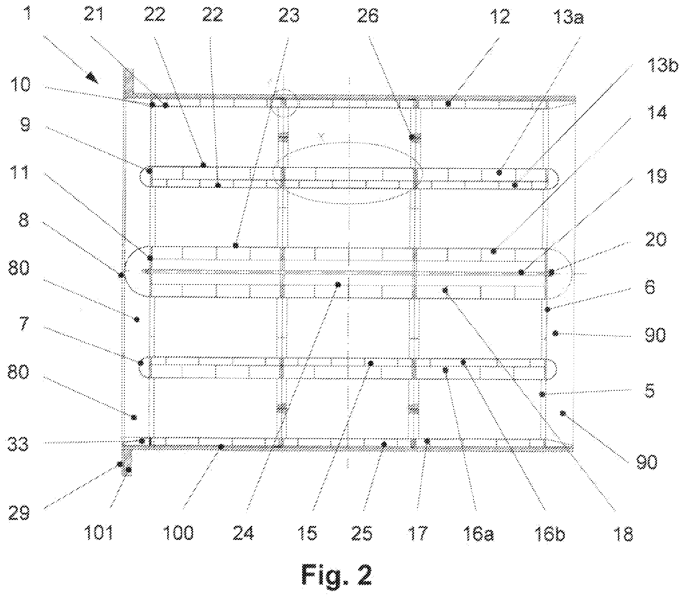

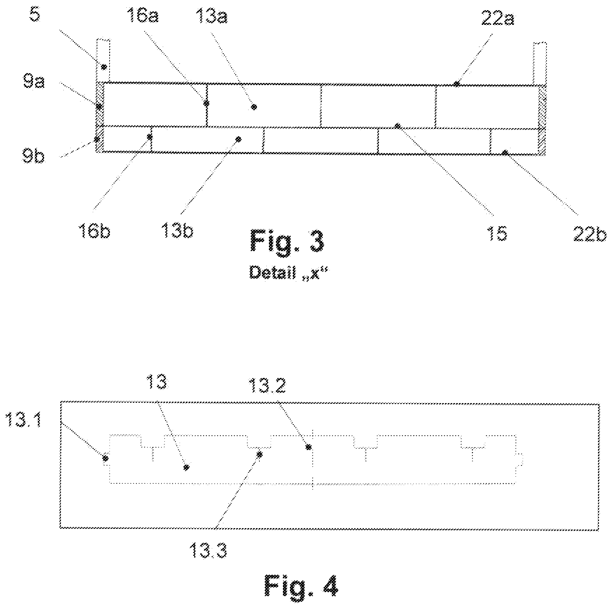

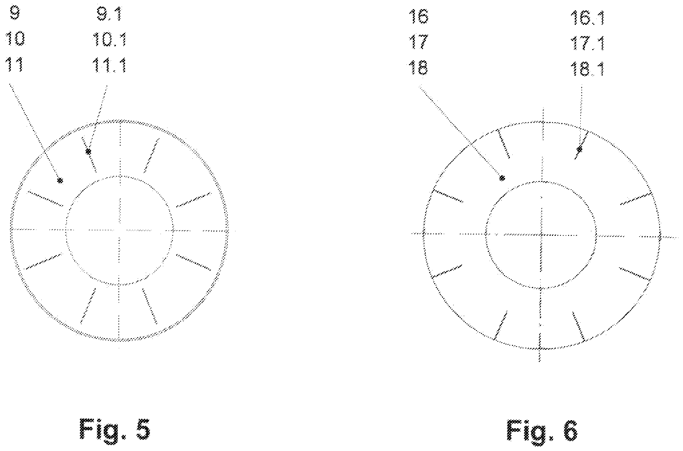

Die Figuren 1 bis 6 zeigen den gesamten Rohschalldämpfer (1) und zugehörige Elemente zur Ausbildung der Dämpferkulissen (2; 3; 4), demnach ist mit dem Bezugszeichen 100 ein Strömungsrohr bezeichnet, in welches der Rohrschalldämpfer (1) eingeschoben wird und über Flansche (3; 101) miteinander lösbar verbunden wird.
Bei dem Ausführungsbeispiel der vorliegenden Erfindung besteht der Rohrschalldämpfer (1) aus drei Hauptelementen, diese werden entlang der Länge über Stifte (21) und über einen zentralen Zuganker (19) lösbar miteinander verbunden.

Alle Rohrschalldämpferelemente sind in ihrem prinzipiellen Aufbau gleich, nur beim Zusammenbau erfolgt die Anpassung an die Einbausituation.

Ein Rohrschalldämpferelement besteht im Wesentlichen aus einer zentralen, innere und äußeren Dämpferkulisse (2; 3; 4), diese werden jeweils über deren zentralen, inneren und äußeren Abschlussbleche (9; 10; 11) mit den inneren sowie äußeren Stützkreuzen (5; 6) miteinander verbunden.

Die zentrale Dämpferkulisse (2) ist ringförmig zentral im Rohrschalldämpfer (1) angeordnet und ist zur strömungsfreien Umfangsseite von einer schallharten Rückwand (24) umgeben, diese ist mit dem zentralen Abschlussblech (11) verbunden. Zum freien Strömungsquerschnitt wird die Dämpferkulisse (2) durch das zentrale schalldämmende Metall (23) begrenzt. Die Dämpferkulisse (2) wird durch zentrale Axialstringer (14), die sich umfangsseitig alle 30° über die gesamte Länge des Rohrschalldämpfers erstrecken, zentrale Umfangsstringer (18) und stirnseitig angebrachte zentrale Abschlussbleche (11) gebildet, wobei diese durch ineinander stecken miteinander verbunden werden. Die zentralen Abschlussbleche (11) enthalten stirnseitig schlitzartige Ausnehmungen (11.1), in diese greifen endseitige Vorsprünge (14.1) der zentralen Axialstringer (14) ein, so dass diese axial fixiert sind. Die zentralen Axialstringer (14) haben neben den endseitigen Vorsprüngen (14.1) auch über die Länge verteilte Vorsprünge (14.2) und Schlitze (14.3), hierbei liegen die Vorsprünge (14.2) an das zentrale schalldämmende Metall (23) an und die Schlitze (14.2) dienen als Eingriffsstellen für die zentralen Umfangsstringer (18). Die zentralen Umfangsstringer (18) haben ebenfalls Schlitze (18.1) zum Eingriff in die zentralen Axialstringer (14).

Die innere Dämpferkulisse (3) ist ringförmig im inneren des Rohrschalldämpfers (1) angeordnet und ist zur strömungsfreien Umfangsseite von einer schallharten Rückwand (24) umgeben, diese ist mit dem inneren Abschlussblech (9) verbunden. Zu beiden freien Strömungsquerschnitten wir die Dämpferkulisse (3) durch innere schalldämmende Metalle (22a; 22b) begrenzt. Die Dämpferkulisse (3) wird durch innere Axialstringer (13a; 13b), die sich umfangsseitig alle 30° über die gesamte Länge des Rohrschalldämpferelementes erstrecken, innere Umfangsstringer (16a; 16b) und stirnseitig angebrachte innere Abschlussbleche (9) gebildet, wobei, anders als bei der zentralen Dämpferkulisse (2), eine umfangsseitige Teilung der ringförmigen Dämpferkulisse (3) durch eine innere schallharte Rückwand (15) erfolgt. Wie bei der zentralen Dämpferkulisse (2) werden innere Axialstringer (13), innere Umfangsstringer (16) und innere Abschlussbleche (9) ineinander gesteckt. Die inneren Abschlussbleche (9) enthalten stirnseitig schlitzartige Ausnehmungen (9.1), in diese greifen endseitige Vorsprünge der inneren Axialstringer (13a; 13b) ein, so dass diese axial fixiert sind. Die inneren Axialstringer (13a; 13b) haben neben den endseitigen Vorsprüngen (13.1) auch über die Länge verteilte Vorsprünge (13.2) und Schlitze (13.3), hierbei liegen die Vorsprünge (13.2) an das innere schalldämmende Metall (22a; 22b) an und die Schlitze (13.3) dienen als Eingriffsstellen für die inneren Umfangsstringer (16a; 16b). Die inneren Umfangsstringer (16a; 16b) haben ebenfalls Schlitze (16.1) zum Eingriff in die inneren Axialstringer (13a; 13b).

Die äußere Dämpferkulisse (4) ist ringförmig außen im Rohrschalldämpfer (1) angeordnet und ist zur strömungsfreien Umfangsseite von einer schallharten Rückwand (25) umgeben, diese ist mit dem äußeren Abschlussblech (10) verbunden. Zum freien Strömungsquerschnitt ist die Dämpferkulisse (4) durch das äußere schalldämmende Metall (21) begrenzt. Die Dämpferkulisse (4) wird durch die Rohrschalldämpferelemente durch Stifte (29) miteinander fixiert und dann durch einen zentralen Zuganker (19) fest miteinander verbunden. Werden (27) verteilt am äußeren Umfang des Rohrschalldämpfers (1) angebracht. Die Anzahl der Ausgleichsbleche (28) kann, abhängig von der Rundheit des Strömungsrohres, (100) unterschiedlich sein.

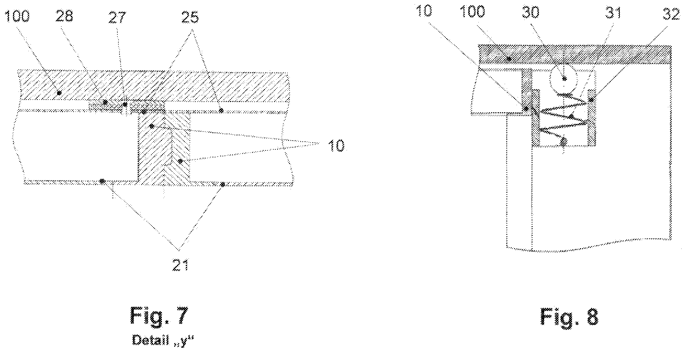

Aus Fig. 8 wird ersichtlich, wie ein optimierter Einbau des Rohrschalldämpfers (1) im Strömungsrohr (100) dadurch zu erzielen ist, dass verteilt am äußeren Umfang zum Ende eines Rohrschalldämpferelementes zusätzlich noch eine Kugelrolle (30) mit einem Federelement (21) in einer Hülse vorgesehen ist. Durch das in Richtung der Wandung des Strömungsrohres (100) vertikal vorgespannte Federelement (31) wird das Rohrschalldämpferelement abgestützt. Zusätzlich erfolgt noch eine Entkoppelung der Schwingungen, so dass diese schlechter übertragen werden und die Schalldämpfung positiv beeinflusst wird.

### Bezugszeichenliste

- 1: Rohrschalldämpfer
- 2: zentrale Dämpferkulisse
- 3: innere Dämpferkulisse
- 4: äußere Dämpferkulisse
- 5: äußeres Stützkreuz
- 6: inneres Stützkreuz
- 7: zentrale Anströmkappe
- 8: innere Anströmkappe
- 9a / 9b: inneres Abschlussbleches
- 9.1: Schlitze des inneren Abschlussbleches
- 10: äußeres Abschlussblech
- 10.1: Schlitze des äußeren Abschlussbleches
- 11: zentrales Abschlussblech
- 11.1: Schlitze des zentralen Abschlussblech
- 12: äußerer Axialstringer
- 12.1: endseitige Vorsprünge des äußeren Axialstringers
- 12.2: längsseitige Vorsprünge des äußeren Axialstringers
- 12.3: Schlitze des äußeren Axialstringers
- 13a / 13b: innerer Axialstringer
- 13.1: endseitige Vorsprünge des inneren Axialstringers
- 13.2: längsseitige Vorsprünge des äußeren Axialstringers
- 13.3: Schlitze des äußeren Axialstringers
- 14: zentraler Axialstringer
- 14.1: endseitige Vorsprünge des zentralen Axialstringers
- 14.2: längsseitige Vorsprünge des äußeren Axialstringers
- 14.3: Schlitze des äußeren Axialstringers
- 15: innere schallharte Rückwand
- 16a / 16b: innere Umfangsstringer
- 16.1: Schlitze des inneren Umfangsstringers
- 17: äußere Umfangsstringer
- 17.1: Schlitze des äußeren Umfangsstringers
- 18: zentraler Umfangsstringer
- 18.1: Schlitze des zentralen Umfangsstringers
- 19: Zuganker
- 20: Kronenmutter
- 21: äußeres schalldämmendes Metallelement
- 22a / 22b: inneres schalldämmendes Metallelement
- 23: zentrales schalldämmendes Metallelement
- 24: zentrale schallharte Rückwand
- 25: äußere schallharte Rückwand
- 26: Stift
- 27: Blindniet
- 28a / 28b / 28c: Ausgleichsblech
- 29: Flansch vom Rohrshalldämpfer
- 30: Kugelrolle
- 31: Federelemet
- 32: Anschlußhülse
- 33: Knotenblech
- 80: Einströmquerschnitt
- 90: Ausströmquerschnitt
- 100: Strömungsrohr
- 101: Flansch vom Kompressor

## Patentansprüche

1. Rohrschalldämpfer zur gezielten Reduktion von Schallwellen für eine Strömungsmaschine, insbesondere für einen Kompressor, mit:
mindestens einem Strömungskanal (80.1; 90.1), der von mindestens einer den Schall reduzierenden Dämpferkulisse (2; 3; 4) umgeben ist,
einem Gehäuse, das aus mindestens einer horizontal verlaufenden schallharten Rückwand (15; 24; 25) und mindestens einem stirnseitigen Abschlussblech (9; 10; 11) besteht,
wobei der jeweilige Strömungskanal (80.1; 90.1) je eine Ein-und Austrittsöffnung besitzt, wobei die Dämpferkulisse (2; 3; 4), aus horizontalen Axialstringern (12; 13; 14), Umfangsstringern (16; 17; 18), dem stirnseitig angebrachten Abschlussblech (9; 10; 11), mindestens einem horizontal zum strömungsführenden Querschnitt verlaufende schalldämmende Metallelemente (21; 22; 23) und aus der schallharten Rückwand (15; 24; 25) besteht, **dadurch gekennzeichnet, dass** Axialstringer (12; 13; 14), Umfangsstringer (16; 17; 18) und Abschlussblech (9; 10; 11) durch Steckverbindungen miteinander verbunden sind.

2. Rohrschalldämpfer nach einem der vorherigen Ansprüche, **dadurch gekennzeichnet dass** anstelle des schalldämmenden Metallelementes (21; 22; 23) Lochblech verwendet wird.

3. Rohrschalldämpfer nach Anspruch 2, **dadurch gekennzeichnet, dass** Axialstringer (12; 13; 14), Umfangsstringer (16; 17; 18), Abschlussblech (9; 10; 11), jeweils durch Vorsprünge und Schlitze ineinander gesteckt sind.

4. Rohrschalldämpfer nach einem der vorherigen Ansprüche, **dadurch gekennzeichnet, dass** dieser nur eine äußere Dämpferkulisse (4) enthält, wobei dann die Dämpferkulisse (4) ringförmig außen im Rohrschalldämpfer (1) angeordnet und zur strömungsfreien Umfangsseite von der schallharten Rückwand (25) umgeben und diese mit dem äußeren Abschlussblech (10) verbunden ist

5. Rohrschalldämpfer nach einem der vorherigen Ansprüche, **dadurch gekennzeichnet, dass** dieser eine äußere und eine mittlere Dämpferkulisse (4; 3) enthält.

6. Rohrschalldämpfer nach Anspruch 5, **dadurch gekennzeichnet, dass** die äußere und mittlere Dämpferkulisse (4; 3) zumindest an den Ein-und Ausströmenden fest mit dem Stützkreuz (6) verbunden sind.

7. Rohrschalldämpfer nach einem der vorherigen Ansprüche, **dadurch gekennzeichnet, dass** dieser eine äußere, eine mittlere und eine zentrale Dämpferkulisse (2; 3; 4) enthält.

8. Rohrschalldämpfer nach Anspruch 7, **dadurch gekennzeichnet, dass** die äußere, die mittlere und die zentrale Dämpferkulisse (4; 3; 2) zumindest an den Ein- und Ausströmenden fest mit dem Stützkreuz (5; 6) verbunden sind.

9. Rohrschalldämpfer nach dem Anspruch 8, **dadurch gekennzeichnet, dass** die Stützkreuze (5; 6) mit dem schalldämmenden Metallelement (21; 22; 23) fest verbunden sind.

10. Rohrschalldämpfer nach einem der vorherigen Ansprüche, **dadurch gekennzeichnet, dass** die Dämpferkulisse (3) doppelt ausgebildet ist und, getrennt durch eine schallharte Rückwand (15), zusätzliche Axialstringer (13b) und zusätzliche Umfangsstringer (16b) eine zweite parallele Dämpferkulisse, (3) bilden.

11. Rohrschalldämpfer nach einem der vorherigen Ansprüche, **dadurch gekennzeichnet, dass** die schallharte Rückwand (15; 24; 25) fest mit den Abschlussblechen (9; 10; 11) verbunden ist.

12. Verfahren zum Einbau eines Rohrschalldämpfers (1) nach einem der vorherigen Ansprüche in ein Strömungsrohr (100) einer Strömungsmaschine, **dadurch gekennzeichnet, dass**, zum Ausgleich eines unrunden Strömungsrohres (100), am äußeren Umfang der schallharten Rückwand (25) mindestens ein Ausgleichsblech (28) angebracht ist.

13. Verfahren zum Einbau eines Rohrschalldämpfers (1) nach einem der vorherigen Ansprüche in ein Strömungsrohr (100) einer Strömungsmaschine, **dadurch gekennzeichnet, dass**, zur Abstützung des Rohrschalldämpfers (1) im Strömungsrohr (1), zum strömungsseitigen Ende eines Rohrschalldämpferelementes an dessen schallharter Rückwand (25) mindestens eine unter Federkraft (31) stehende Kugelrolle (30) umfangsseitig angebracht ist.

14. Verfahren nach Anspruch 13, **dadurch gekennzeichnet, dass** die Federkraft (31) im Wesentlichen vertikal in Richtung innere Wandung des Strömungsrohres (100) wirkt.

## Claims

1. An in-line silencer for the specific reduction of sound waves for a turbomachine, in particular for a compressor, having: at least one flow passage (80.1; 90.1), which is surrounded by at least one sound-reducing silencer screen (2; 3; 4), a housing, consisting of at least one horizontally extending reverberating back wall (15; 24; 25) and at least one face end termination plate (9; 10; 11), wherein the respective flow passage (80.1; 90.1) has an inlet and outlet opening each, wherein the silencer screen (2; 3; 4) consists of horizontal axial stringers (12; 13; 14), circumferential stringers (16; 17; 18), the termination plate (9; 10; 11) attached at the face end, at least one sound-damping metal element (21; 22; 23) extending horizontally to the flow-conducting cross section and of the reverberating back wall (15; 24; 25), **characterized in that** axial stringers (12; 13; 14), circumferential stringers (16; 17; 18) and termination plate (9; 10; 11) are interconnected by plug connections.

2. The in-line silencer according to any one of the preceding claims, **characterized in that** instead of the sound-damping metal element (21; 22; 23), perforated plate is used.

3. The in-line silencer according to Claim 2, **characterized in that** axial stringers (12; 13; 14), circumferential stringers (16; 17; 18), termination plate (9; 10; 11), are each plugged into one another by way of protrusions and slots.

4. The in-line silencer according to any one of the preceding claims, **characterized in that** the same contains only one outer silencer screen (4), wherein the silencer screen (4) is then annularly arranged on the outside in the in-line silencer (1) and towards the flow-free circumferential side is surrounded by the reverberating back wall (25) and the same is connected to the outer termination plate (10).

5. The in-line silencer according to any one of the preceding claims, **characterized in that** the same contains an outer and a middle silencer screen (4; 3).

6. The in-line silencer according to Claim 5, **characterized in that** the outer and middle silencer screen (4; 3) is connected to the support cross (6) in a fixed manner at least at the inflow and outflow ends.

7. The in-line silencer according to any one of the preceding claims, **characterized in that** the same contains an outer, a middle and a central silencer screen (2; 3; 4).

8. The in-line silencer according to Claims 7, **characterized in that** the outer, the middle and the central silencer screen (4; 3; 2) are connected to the support cross (5; 6) in a fixed manner at least at the inflow and outflow ends.

9. The in-line silencer according to Claim 8, **characterized in that** the support crosses (5; 6) are connected in a fixed manner to the sound-damping metal element (21; 22; 23).

10. The in-line silencer according to any one of the preceding claims, **characterized in that** the silencer screen (3) is of a double design and, separated by a reverberating back wall (15), additional axial stringers (13b) and additional circumferential stringers (16b), form a second parallel silencer screen (3).

11. The in-line silencer according to any one of the preceding claims, **characterized in that** the reverberating back wall (15; 24; 25) is connected in a fixed manner to the termination plates (9; 10; 11).

12. A method for the installation of an in-line silencer (1) according to any one of the preceding claims in a flow tube (100) of a turbomachine, **characterized in that** for offsetting an oval flow tube (100), at least one compensation plate (28) is attached to the outer circumference of the reverberating back wall (25).

13. The method for the installation of an in-line silencer (1) according to any one of the preceding claims, in a flow tube (100) of a turbomachine, **characterized in that** for supporting the in-line silencer (1) in the flow tube (100), towards the flow-side end of an in-line silencer element at least one spherical roller (30) subjected to a spring force (31) is circumferentially attached to the reverberating back wall (25) of said in-line silencer element.

14. The method according to Claim 13, **characterized in that** the spring force (31) substantially acts vertically in the direction of the inner wall of the flow tube (100).

## Revendications

1. Amortisseur de bruit tubulaire pour la réduction ciblée d'ondes sonores pour une turbomachine, notamment pour un compresseur, comportant :
au moins un canal d'écoulement (80.1,90.1), qui est entouré par au moins une coulisse d'amortisseur réduisant les sons (2 ;3 ;4),
un logement, qui est composé d'au moins une paroi arrière réverbérant les sons s'étendant horizontalement (15 ;24 ;25) et au moins une tôle de fermeture frontale (9 ;10 ;11),
dans lequel le canal d'écoulement respectif (80.1 ;90,1) possède une ouverture d'entrée et une ouverture de sortie, dans lequel la coulisse d'amortisseur (2 ;3 ;4) est composée par des raidisseurs axiaux horizontaux (12 ; 13 ; 14), des raidisseurs circonférentiels (16 ;17 ; 18), la tôle de fermeture montée frontalement (9 ; 10 ; 11), au moins un élément métallique (21 ;22 ;23) amortissant les sons s'étendant horizontalement à la section transversale guidant l'écoulement et la paroi arrière réverbérant les sons (15 ;24 ;25), **caractérisée en ce que** les raidisseurs axiaux (12 ;13 ;14), les raidiseurs circonférentiels (16 ; 17 ; 18) et la tôle de fermeture (9 ; 10 ;11) sont reliés aux autres par des liaisons enfichables.

2. Amortisseur de bruit tubulaire selon une des revendications précédentes, **caractérisé en ce que** une tôle perforée est utilisée à la place de l'élément métallique amortissant les sons (21 ;22 ;23).

3. Amortisseur de bruit tubulaire selon la revendication 2, **caractérisé en ce que** les raidisseurs axiaux (12 ; 13 ; 14), les raidisseurs circonférentiels (16 ; 17 ; 18), la tôle de fermeture (9 ; 10 ; 11) sont respectivement enfichés les uns dans les autres au moyen de protubérances et de fentes.

4. Amortisseur de bruit tubulaire selon une des revendications précédentes, **caractérisé en ce que** celui-ci contient uniquement une coulisse d'amortisseur extérieure (4), dans lequel la coulisse d'amortisseur (4) est ensuite disposée annulairement à l'extérieur dans l'amortisseur de bruit tubulaire (1) et est entourée dans la direction du côté circonférentiel sans écoulement par la paroi arrière réverbérant les sons (25) et cette dernière est reliée avec la tôle de fermeture extérieure (10).

5. Amortisseur de bruit tubulaire selon une des revendications précédentes, **caractérisé en ce que** ce dernier contient une coulisse d'amortisseur (4 ; 3) extérieure et médiane.

6. Amortisseur de bruit tubulaire selon la revendication 5, **caractérisé en ce que** les coulisses d'amortisseur extérieure et médiane (4 ; 3) sont reliées solidement avec le croisillon d'appui (6) au moins à leurs extrémités d'amenée et d'évacuation.

7. Amortisseur de bruit tubulaire selon une des revendications précédentes, **caractérisé en ce que** celui-ci contient une coulisse d'amortisseur (2 ; 3 ; 4) extérieure, médiane et centrale.

8. Amortisseur de bruit tubulaire selon la revendication 7, **caractérisé en ce que** les coulisses d'amortissement extérieure, médiane et centrale (4 ; 3 ; 2) sont reliées solidement au croisillon d'appui (5 ; 6) au moins à leurs extrémités d'amenée et d'évacuation.

9. Amortisseur de bruit tubulaire selon la revendication 8, **caractérisé en ce que** les croisillons d'appui (5 ; 6) sont reliés solidement avec l'élément métallique amortissant les sons (21 ; 22 ; 23).

10. Amortisseur de bruit tubulaire selon une des revendications précédentes, **caractérisé en ce que** la coulisse d'amortisseur (3) a une configuration double et, séparés par une paroi arrière réverbérant les sons (15), des raidisseurs axiaux supplémentaires (13b) et des raidisseurs circonférentiels supplémentaires (16b) forment une deuxième coulisse d'amortisseur parallèle (3) .

11. Amortisseur de bruit tubulaire selon une des revendications précédentes, **caractérisé en ce que** la paroi arrière réverbérant les sons (15 ; 24 ; 25) est relié solidement avec les tôles de fermeture (9 ; 10 ; 11).

12. Procédé de montage d'un amortisseur de bruit tubulaire (1) selon une des revendications précédentes dans un tuyau d'écoulement (100) d'une turbomachine, **caractérisé en ce que**, pour l'équilibrage d'un tuyau écoulement non circulaire (100), au moins une tôle d'équilibrage (28) est montée sur la circonférence extérieure de la paroi arrière réverbérant les sons (25) .

13. Procédé de montage d'un amortisseur de bruit tubulaire (1) selon une des revendications précédentes dans un tuyau d'écoulement (100) d'une turbomachine, **caractérisé en ce que**, pour appuyer l'amortisseur de bruit tubulaire (1) dans le tube d'écoulement (1), en allant vers une extrémité du côté d'écoulement d'un élément d'amortisseur de bruit tubulaire sur sa paroi arrière réverbérant les sons (25), au moins un rouleau sphérique (30) soumis à une force élastique (31) est monté du côté circonférentiel.

14. Procédé selon la revendication 13, **caractérisée en ce que** la force élastique (31) agit essentiellement verticalement dans la direction de la paroi intérieure du tuyau d'écoulement (100).
